# EUROPEAN PATENT APPLICATION

(11) **EP 3 582 136 A1**
(43) Date of publication of application: **18.12.2019**
(21) Application number: 18177892.9
(22) Date of filing: 15.06.2018
(51) Int. Cl.: G06K 9/00, G06K 9/32, G06K 9/46

(54) **METHOD AND DEVICE FOR EXTRACTING COARSE REGIONS OF INTEREST FROM A RECORDED IMAGE OF A ROAD SURFACE FOR DETECTING ROAD OBJECTS ON THE ROAD SURFACE**

(71) Applicant: Continental Automotive GmbH, 30165 Hannover (DE)
(72) Inventor: Pedamalli, Saikrishna, 560037 Bangalore (IN); Nagaraj, Avinash, 89077 Ulm (DE)
(74) Representative: Reuter, Andreas

(57) **Abstract**

A segmentation method to extract coarse regions of interest from a recorded image of a road surface for detecting objects on the road surface comprises recording an image of the road surface with a camera; subdividing the recorded image into mutually overlapping patches; calculating, for each patch, if a mean absolute deviation of intensity values within the respective patch is above a threshold; calculating, for each patch, if a mean intensity of the respective patch deviates from at least the 60th percentile of the intensities within the recorded image; collecting all patches for which the mean absolute deviation is above the threshold and/or the mean intensity deviates from at least the 60th per-centile; and connecting mutually overlapping patches of the collected patches to form coarse regions of interest.

## Description

The present invention pertains to a method and a device for extracting coarse regions of interest from a recorded image of a road surface for detecting objects on the road surface.

In assisted and/or automated driving cameras are installed for various purposes inside and/or outside of vehicles. For example, a camera may be installed in a front side of a vehicle in order to capture the road ahead of the vehicle. In the context of assisted and/or autonomous driving, a need arises for automatically reconstructing objects on the road, and in particular on the road surface, in front, behind and/or alongside of the vehicle. For example, road surface markings like arrows, lines and so on are utilized on paved roadways to provide guidance and information to drivers and pedestrians. Other objects on the road surface and/or visually detectable characteristics of the road surface that may be relevant for driving a vehicle comprise damages to the road surface like potholes, bumps and so on, as well as debris or other deposits on the road surface.

Various algorithms have been used to segment recorded images into regions of interested, which may then be further analyzed in order to reconstruct interesting objects within the image. Commonly used segmentation algorithms comprise k-means clustering and mean-shift clustering. The simultaneous reconstruction of various different objects like potholes, bumps, pavement signs and debris on very short time scales puts high requirements on such algorithms. As a consequence, the run time complexity of such algorithms may be too high and/or their performance may be too low for practical purposes.

Prior art document Jo et al., "Pothole Detection System Using a Black-Box Camera," Sensors (Basel, Switzerland), 15(11):29316-29331, 2015, describes a pothole-detection system using a commercial black-box camera.

Prior art document Wu et al., "A Practical System for Road Marking Detection and Recognition," IEEE Intelligent Vehicles Symposium, pp. 25-30, 2012, describes a system for detecting and recognizing road markings from video input obtained from an in-car camera. The system learns feature-based templates of road markings from training data and matches these templates to detected features in the test images during runtime.

Prior art document Chalana et al., "Object Scanning Based Road Obstacles Detection Using Weighted Sum Method - A Review," International Journal of Computer Science and Information Technologies, Vol. 6(1), 240-242, 2015, discloses an image-based vehicle detection and tracking algorithm using a weighted sum method.

Against this background, it is an object of the present invention to find simpler and faster solutions for extracting regions of interest in order to identify objects on road surfaces.

This object is achieved by a method having the features of claim 1 and a control device having the features of claim 8.

According to an aspect of the invention, a segmentation method to extract coarse regions of interest from a recorded image of a road surface for detecting objects on the road surface comprises recording an image of the road surface with a camera; subdividing the recorded image into mutually overlapping patches; calculating, for each patch, if a mean absolute deviation of intensity values within the respective patch is above a threshold; calculating, for each patch, if a mean intensity of the respective patch deviates from at least the 60th percentile of the intensities within the recorded image; collecting all patches for which the mean absolute deviation is above the threshold and/or the mean intensity deviates from at least the 60th per-centile; and connecting mutually overlapping patches of the collected patches to form coarse regions of interest.

According to another aspect of the invention, a control device comprises a processor configured to perform a method according to the invention.

The present invention exploits the fact that road surface markings, debris and other relevant road objects usually have a significantly different visual appearance than the average road surface so that the corresponding images exhibit different intensities in surface regions containing such objects than in surface regions without them. The present invention determines relevant local variations in intensity (intrapatch mean absolute deviation above a certain threshold) as well as significant discrepancies in the average intensity (deviation from the 60th or higher percentile) as potential areas of interest. The segmentation algorithm runs on mutually overlapping patches, which are then connected to regions of interest in case at least one of the intensity criteria is fulfilled and thus an interesting object is potentially located inside the specific patches. The present algorithm originates from the basic insight of the inventors that a coarse segmentation reduces memory usage as well as time complexity compared to other segmentation algorithms.

The regions of interest serve as a basic separation between foreground and background of the image and may be further analyzed. For example, specific road surface markings may be reconstructed from the regions of interest. The acquired information may then be used in assisted and/or automated driving systems in order steer the vehicle according to the current road conditions.

Advantageous embodiments and improvements of the present invention are found in the subordinate claims.

According to an embodiment, the patches may be rectangular. The patches thus feature a very simple geometry so that the algorithm is kept as simple as possible.

The patches may further be mutually semi-overlapping. Semi-overlapping within the context of the present invention means that the individual patches overlap with three (in case of patches at a corner of the image), five (in case of patches that are on the edge of the image) or eight (in case of patches displaced from the image edges and corners) other patches with an overlap of half the respective side length. This means that, for example, each inner patch of the image is overlapped by eight other such patches. This provision ensures a simple and fast algorithm.

According to an embodiment, a patch size of the patches may depend on an object size of the objects to be detected. Hence, the patch size may be optimized for the size of particular predefined objects, as for example particular road signs or similar.

According to an embodiment, the threshold may depend on an expected object intensity of the objects to be detected. For example, the threshold may be chosen such that specific road markings are reconstructed. In another example the threshold may be chosen to predominantly reconstruct specific important road surface markings, for example markings related to vehicle safety. The threshold may be chosen depending on certain driving conditions, e.g. weather conditions.

According to an embodiment, the method may further comprise applying inverse perspective mapping on the recorded image before subdividing the recorded image into mutually overlapping patches. Inverse perspective mapping removes some or all perspective effects from an image by homogeneously redistributing the information content of an image plane into a new two-dimensional domain. Depending on the use case at hand, inverse perspective mapping may improve the reconstruction process as the identification of certain objects may be simplified after removal of perspective effects.

According to an embodiment, the objects may comprise road surface markings, bumps, potholes and/or debris and/or similar objects. The present algorithm thus is particularly able to simultaneously segment images to extract regions of interest for all these objects.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. In the figures, like reference numerals denote like or functionally like components, unless indicated otherwise.
Figs. 1a-c schematically show recorded images of a road surface used to extract coarse regions of interest with a method according to an embodiment of the invention.
Fig. 2 shows a schematic flow diagram of the method used in Fig. 1.
Fig. 3 shows a schematic side view of a vehicle with a control device executing the method of Figs. 1 and 2.

Although specific embodiments are illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

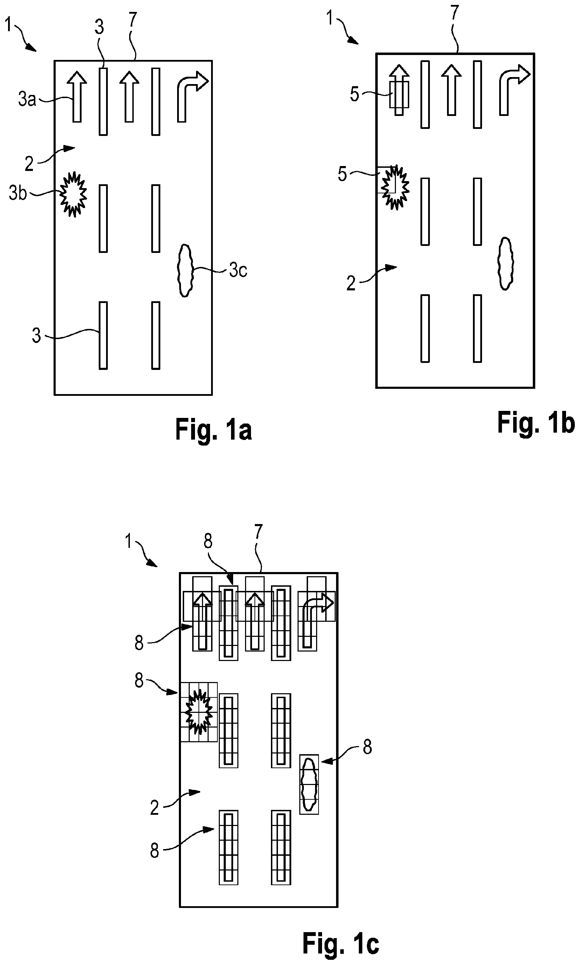

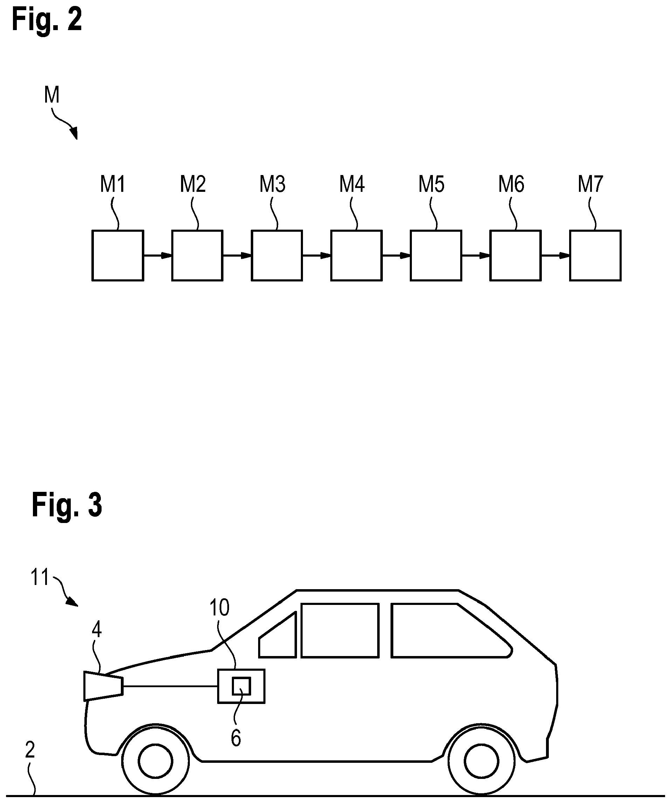

Figures 1a-c schematically show recorded images 1 of a road surface 2 used to extract coarse regions of interest 8 with a method M according to an embodiment of the invention. A flow diagram of the method M is shown in Fig. 2. Fig. 3 depicts a vehicle 11 with a control device 10 for executing the method M. The vehicle 11 shown in Fig. 3 may be, for example, a motor vehicle like a car or similar.

The vehicle 11 is driving or standing on a road surface 2. The vehicle 11 is equipped with a camera 4, which is configured to capture the road surface 2 in front of the vehicle 11 and record images of the road surface 2. The camera 4 is further communicatively connected with the control device 10 of the vehicle 11. The control device 10 comprises amongst others a processor 6 configured to execute a segmentation method M to extract coarse regions of interest 8 from a recorded image 1 of the road surface 2 for detecting objects 3 on the road surface 2. Detected objects 3 include road surface markings 3a like arrows, lines and so on, as well as pot holes 3b, bumps, debris 3c etc.

The segmentation method M comprises under M1 recording an image 1 of the road surface 2 with the camera 4. The recorded image 1 may then be obtained by the control device 10 and a road boundary 7 may be determined based on the recorded image 1. The method M further comprises under M2 applying an inverse perspective mapping on the recorded image 1 in order to transform the recorded image 1 into a well-defined two-dimensional image without any relevant remaining perspective distortions. The resulting image 1 is shown in Fig. 1a. The image 1 shows an exemplary detail of a road surface 2 with three lanes and corresponding separating strips or lines and other objects 3 on the road surface 2. These objects 3 comprise not only road surface markings 3a like arrows, lines or strips, but also pot holes 3b and debris 3c.

The method M further comprises under M3 subdividing the recorded image 1 into mutually overlapping rectangular patches 5. Fig. 1b exemplary depicts two such patches 5 (cf. Fig. 1c for overlapping patches), whose specific size may be chosen according to the type of object being reconstructed, e.g. on the size of the expected road surface markings 3a. Next, the method M comprises under M4 calculating, for each patch 5, if a mean absolute deviation of intensity values within the respective patch 5 is above a certain threshold. To this end, the threshold may be chosen according to the type of object 3 under reconstruction, in particular depending on their expected visual appearance, i.e. intensity within the image. For example, the upper patch 5 in Fig. 1b may fall in this category of patches 5. As can be seen in Fig. 1b, the patch 5 contains not only parts of a road surface marking 3a (an arrow) but also parts of the road surface 2. Hence, the mean absolute deviation in intensity will differ in this patch 5 from, for example, a patch 5 including only parts of the road surface 2.

The method M further comprises under M5 calculating, for each patch 5, if a mean intensity of the respective patch 5 deviates from the 60th percentile of the intensities within the recorded image 1. However, higher percentiles may be employed depending on the specific application, e.g. 70th percentile and so on. For example, the lower patch 5 in Fig. 1b may fall in this category of patches 5. As can be seen in Fig. 1b, the patch 5 contains parts of a pothole 3b. The mean absolute deviation of intensity values within this patch 5 may not surpass the required threshold, e.g. because a significant fraction of the patch 5 may be filled by the pothole 3b and/or the patch 5 may entirely fall into the pothole 3b and hence the intensity variation across the patch 5 may not differ significantly from, e.g., a patch 5 merely including parts of the road surface 2. However, the average intensity of the patch 5 may nevertheless differ relevantly from the average intensity of the road surface 2. As the larger fraction of the image 1 is covered by the road surface 2, the 60th percentile in intensity will be defined by the average road color. Hence, a deviation of the average intensity of the patch 5 from the 60th percentile means that the patch 5 on average looks different from the road surface 2, which is a strong indication that an object is located within the patch 5 (in this case: the pothole 3b).

If one of the two above intensity criteria is fulfilled it is hence assumed that the patch 5 may potentially contain an object of interest, i.e. a region of the road surface 2 that looks significantly different than a bare region of the road surface 2. Consequently, the method M further comprises under M6 collecting all patches 5 for which the mean absolute deviation is above the threshold and/or the mean intensity deviates from at least the 60th per-centile. The method M then comprises under M7 connecting mutually overlapping patches 5 of the collected patches 5 to form coarse regions of interest 8. This is demonstrated in Fig. 1c, where several regions of interest 8 are shown, each of which being formed by connecting several individual patches 5 fulfilling the above intensity criteria. Some of these regions of interest 8 contain road surface markings 3a, others potholes 3b, and yet others debris 3c.

The algorithm of this embodiment is much faster and simpler, i.e. less memory and computing power consuming, than segmentation algorithms conventionally employed for reconstructing regions of interest in images of vehicle cameras.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. Many other examples will be apparent to one skilled in the art upon reviewing the above specification.

### REFERENCE SIGNS

- 1: recorded image
- 2: road surface
- 3: object
- 3a: road surface marking
- 3b: pothole
- 3c: debris
- 4: camera
- 5: patch
- 6: processor
- 7: road boundary
- 8: region of interest
- 10: control device
- 11: vehicle
- M: method
- M1: method step
- M2: method step
- M3: method step
- M4: method step
- M5: method step
- M6: method step
- M7: method step

## Claims

1. A segmentation method (M) to extract coarse regions of interest (8) from a recorded image (1) of a road surface (2) for detecting objects (3) on the road surface (2), the segmentation method (M) comprising:
recording (M1) an image (1) of the road surface (2) with a camera (4);
subdividing (M3) the recorded image (1) into mutually overlapping patches (5);
calculating (M4), for each patch (5), if a mean absolute deviation of intensity values within the respective patch (5) is above a threshold;
calculating (M5), for each patch (5), if a mean intensity of the respective patch (5) deviates from at least the 60th percentile of the intensities within the recorded image (1);
collecting (M6) all patches (5) for which the mean absolute deviation is above the threshold and/or the mean intensity deviates from at least the 60th percentile; and
connecting (M7) mutually overlapping patches (5) of the collected patches (5) to form coarse regions of interest (8) .

2. The method (M) according to claim 1, wherein the patches (5) are rectangular.

3. The method (M) according to claim 2, wherein the patches (5) are mutually semi-overlapping.

4. The method (M) according to one of the claims 1 to 3, wherein a patch size of the patches (5) depends on an object size of the objects (3) to be detected.

5. The method (M) according to one of the claims 1 to 4, wherein the threshold depends on an expected object intensity of the objects (3) to be detected.

6. The method (M) according to one of the claims 1 to 5, further comprising:
applying (M2) inverse perspective mapping on the recorded image (1) before subdividing the recorded image (1) into mutually overlapping patches (5).

7. The method (M) according to one of the claims 1 to 6, wherein the objects (3) comprise at least one of road surface markings (3a), bumps, potholes (3b) and debris (3c) .

8. A control device (10) comprising a processor (6) configured to perform a method (M) according to one of the claims 1 to 7.
